# EUROPEAN PATENT SPECIFICATION

(11) **EP 0 427 453 B1**
(45) Date of publication and mention of the grant of the patent: **01.02.1995**
(21) Application number: 90311948.5
(22) Date of filing: 01.11.1990
(51) Int. Cl.: F16L 41/04, F16L 55/00, F16L 1/00, B23D 21/00

(54) **Cutting apparatus**
Methode und Apparat zum Schneiden eines Rohres
Méthode et appareil pour couper un tuyau

(30) Priority: 07.11.1989 GB 8925104
(43) Date of publication of application: 15.05.1991
(73) Proprietor: British Gas plc, London SW1V 3JL (GB)
(72) Inventor: McGuire, Brian Edward, Shaw, Oldham, OL2 7RW (GB)

(56) References cited:
- DE-A- 2 749 287
- DE-A- 3 120 009
- DE-A- 3 151 641
- GB-A- 2 197 044
- SU-A- 666 007
- SU-A- 1 335 383
- OPERATING SECTION PROCEEDINGS, 1971, American Gas Association, pages D121 - D123
- GAS WORLD, April 1988, page 25

## Description

This invention relates to cutting apparatus, more particularly, though not exclusively, to a cutting apparatus for cutting a workpiece in the form of a pipe or a tube. The invention also relates to a method for cutting a workpiece such as a pipe or a tube, and to a method of joining a pipe to a host pipe.

It is often necessary to cut a hole or a 'window' in the wall of a pipe or a tube, for instance when joining a branch pipe to a host pipe to form a T junction. In most cases it is desirable to cut the window as accurately as possible, both in terms of depth of cut and line of cut. For example, pipes of cast iron or other metal are often lined with a plastics liner and, when connecting a branch pipe to the host pipe, it is conventional to seal the branch pipe to the plastics liner. It is, therefore, desirable to cut out a window from the metal outer wall without penetrating or without significantly cutting into the plastics liner, thereby exposing an area of the outer surface of the plastics liner to which the branch pipe can be connected in a subsequent operation. It will be appreciated that precise control over the depth of cut can be particularly important, so as to ensure that the metal outer wall is substantially fully penetrated without or without significantly cutting into the plastics liner.

Unfortunately, accuracy has been found to be difficult to achieve in practice for a number of reasons. For example, the curved outer surface of the pipe makes it difficult to establish, and to maintain, a reference surface against which cutter movement can be measured. Another difficulty arises from the location of the pipe itself; it is usual for pipes to be worked on in situ and access to the pipe may well be restricted, particularly where the pipe is underground such as in a gas main or a water main system.

The publication 'Gas World', April 1988, at page 25, and the article entitled 'Axial Pipe Window cutter for Steel Pipe without Damage to Inserted Plastic' in American Gas Association's '1971 Operating Section Proceedings' at pages D121 to D123 both disclose an axial pipe cutter and also a separate radial pipe cutter. The axial pipe cutter comprises a carriage assembly, incorporating cutter wheels, which is slidably mounted on support bars. The support bars are mounted and secured on a pipe to be cut by link chains which embrace the pipe. The carriage assembly, and thus the cutter wheels, is slidable back and forth along the support bars and longitudinally of the pipe while a feed screw advances the cutter wheels into the pipe with the result that longitudinal cuts are made in the pipe. The axial pipe cutter can be rotated on the pipe so that another longitudinally cut can be made in pipe at a different position on the circumference of the pipe. The axial pipe cutter produces only longitudinal cuts in the pipe. The separate radial pipe cutter is generally in the form of a clamp having rollers and opposite cutting wheels. The pipe to be cut is located between the rollers and opposing cutting wheels. The cutting wheels can be advanced into the pipe and the radial pipe cutter rotated or moved back and forth about the circumference of the pipe over an arc so that the cutting wheels make a circumferential cut in the pipe. The radial pipe cutter can then be removed from the pipe and secured on it at another position along the pipe whereat another circumferential cut can be made in the pipe over a corresponding arc. The separate axial and radial cutters can be mounted at different times on the pipe to produce intersecting longitudinal and circumferential cuts in the pipe to form a window which is removed from the pipe. Thus, the window is produced by using two separate, different devices.

DE-A-3151641 discloses a cutting apparatus for cutting off a no longer required branch pipe from a gas supply main without any break in the flow of gas. The cutting apparatus comprises a supporting frame which is clamped to the gas main by means of two chains, and a carrier arrangement which carries a cutting device. The carrier arrangement is slidably mounted on and adjustable with respect to the supporting frame, and the cutting device is hingedly connected to the carrier arrangement so that the cutting device can be moved into position to cut across and completely through the branch pipe. The cutting device comprises a circular saw blade, or a straight saw blade with a plate fixed behind the blade. The saw blade is arranged to cut only transversely through the branch pipe leaving either a portion of the circular blade or the plate temporarily sealing or blocking off the otherwise open end of the remaining stub of the branch pipe which is connected to the gas main, for the purpose of preventing other than a relatively small escape of gas prior to the open end being permanently capped or plugged.

DE-A-3120009 discloses apparatus for cutting and separating continuously fed tubular workpieces into predetermined lengths. The apparatus comprises a supporting frame and a carrier which is mounted on the frame and is slidable back and further with respect thereto in the longitudinal directions of the workpieces. The carrier has two spaced apart sets of jaws for gripping the tubular workpiece. A carriage supporting a cutting blade and two separating blades in alignment is slidably mounted on the carrier and can be driven back and forth in a direction across or transverse of the gripped tubular workpiece so that during each cycle of operation the cutting blade effects, only in a transverse direction of the pipe, a cut in the pipe in a region of the gap between the two sets of jaws, and one of the separating blades penetrates the cut and separates a predetermined length from the tubular workpiece.

GB 2197044 discloses a cutting apparatus for, and a method of, cutting a circular aperture in the outer layer of a main pipe comprising outer and inner layers, and also a method of joining a branch pipe to the main pipe. A rotating cup drill or tank cutter is attached to a drilling apparatus which is moved in a straight line, on a chosen radius line of the pipe, towards the pipe to cut the circular aperture which will have a diameter that is substantially the same as the diameter of the cutter. During the cutting operation a probe, which is fixed to the cutting apparatus, urges a portion of the inner layer inwardly to ensure a clearance between the outer and inner layers so that the cutter does not cut into the inner layer. After removal of the cutter together with the probe a branch pipe can be secured to the inner layer, after which an opening is formed in the inner layer to allow communication between the interiors of the main and branch pipes.

DE-A-2749287, which is considered to be the closest prior art document, discloses a pipe wall circular hole milling tool connected to a copying device supported on the wall of the pipe. The tool is mounted with respect to a pivot axis which is substantially perpendicular to the longitudinal axis of the pipe. The tool is movable around the pivot axis to subscribe a full circle and is displaceable parallel to the axis, the tool being fitted on a slide which is movable parallel to the pivot axis towards the wall of the pipe. The tool can also be moved towards and away from the pivot axis so as to adjust the radius of the circle to be subscribed.

An object of the invention is to provide a single piece of cutting apparatus for effecting both circumferential and longitudinal cuts in the wall of a pipe, and to utilise the manner in which the pipe may be cut in a method of joining a pipe to a host pipe comprising an outer layer of material and an inner lining.

In accordance with a first aspect of the invention, apparatus for cutting a window in a pipe comprises a chassis having a cutter assembly comprising a cutter unit provided with a milling cutting tool, the cutter assembly being movably mounted on the chassis so as to be movable longitudinally of the pipe and the cutter unit beng movable in directions transverse to the directions of movement of the cutter assembly along the chassis and, in use, towards and away from the pipe, and the cutting tool being capable of effecting cuts in the pipe wall in transverse directions, attachment means adapted to embrace the pipe to attach the chassis to the pipe and to enable the chassis to be moved relative to the pipe in directions transverse to the directions of movement of the cutter assembly along the chassis and circumferentially of the pipe when the apparatus is in use; and traction means associated with the chassis to facilitate accurately controlling the positioning and movement of the chassis relative to the pipe.

The attachment means preferably comprises one or more chains. In order to reduce friction the chain or chains may be provided with rollers and the chassis can be fitted with wheels.

The traction means suitably comprises a chain for attachment to the workpiece, which engages with sprocket means mounted on the chassis. The sprocket means may be driven via, for example, a gear train or worm wheel. The chassis may be provided with securing means for preventing movement of the chassis relative to the workpiece during cutting of the workpiece by movement of the cutting tool relative to the chassis. Such securing means may comprise one or more clamps or set screws which can be tightened against the surface of the workpiece.

In accordance with another aspect of the invention, a method of joining a pipe to a host pipe comprising an outer layer of material and an inner lining, comprises employing a cutting tool to cut through the outer layer to produce a cut line around a portion or area of the outer layer, removing said portion from the pipe to produce a window or opening which exposes an area of the underlying lining, producing an opening in the exposed area of the lining and joining the pipe to the exposed lining to form a branch pipe which communicates with the interior of the host pipe via the opening, characterised in that the method employs the apparatus as defined in accordance with the first aspect of the invention, with the cutting tool being moved in transverse directions to cut through the outer layer in transverse directions without or without significantly cutting into the underlying lining to produce the cut line around the portion or area of the outer layer.

In accordance with a further aspect of the invention, a method of cutting out and removing a portion of an outer layer of a host pipe comprising an outer layer of material and an inner lining, comprises employing a cutting tool to cut through the outer layer to produce a cut line around a portion or area of the outer layer, and removing said portion from the pipe to produce a window or opening which exposes an area of the underlying lining, characterised in that the method employs the apparatus as defined in accordance with the first aspect of the invention, with the cutting tool being moved in transverse directions to cut through the outer layer in transverse directions without or without significantly cutting into the underlying inner lining to produce the cut line around the portion or area of the outer layer.

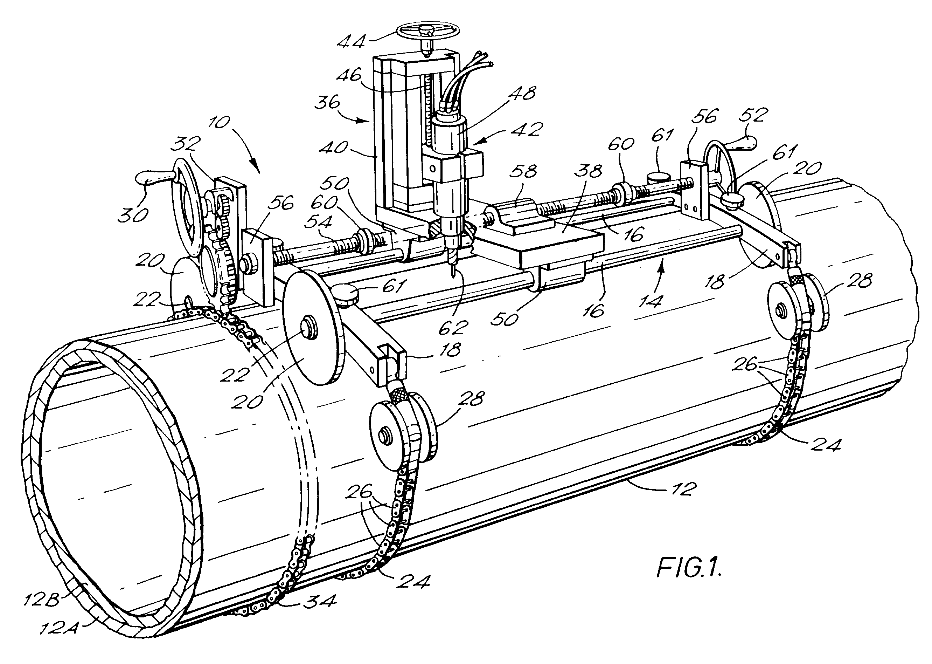

In order that this invention may be more readily understood, reference will now be made, by way of example only, to the accompanying drawing. This drawing, Figure 1, is a schematic perspective view showing a preferred embodiment of the invention in use, mounted upon a pipe.

In Figure 1, a cutting apparatus 10 is shown mounted upon a pipe 12. The pipe 12 has a metallic outer layer 12a, for example of cast iron, and a plastics inner lining 12b.

The cutting apparatus 10 comprises a chassis frame 14, which is formed from two parallel longitudinal tubular members 16 connected at their respective ends by transverse curved end beams 18. Each end beam 18 carries a pair of wheels 20 on its outer side. The wheels 20 rest upon the pipe 12 and therefore support the chassis frame 14 at a fixed distance from the outer surface of the pipe 12.

The wheels 20 are mounted for rotation upon respective longitudinal axles 22, which are suitably aligned with the tubular members 16 as shown. Thus, the wheels 20 allow the chassis frame 14 to move circumferentially with respect to the pipe 12 whilst keeping the chassis frame 14 at a fixed distance from the pipe 12. Conversely, the wheels 20 resist longitudinal movement of the chassis frame 14 with respect to the pipe 12.

Each end beam 18 co-operates with a respective attachment chain 24 to encircle the pipe 12, the ends of each attachment chain 24 being connected to respective ends of each beam 18. At least one end of each attachment chain 24 is detachable from the associated end beam 18 to allow the chassis frame 14 to be mounted upon, or dismounted from, the pipe 12.

The attachment chains 24 are tightened in use about the pipe 12, thereby keeping the wheels 20 in close contact with the outer surface of the pipe 12. A series of rollers 26 and a set of wheels 28 carried by each chain 24 eases circumferential movement of each chain 24 about the pipe 12, by reducing friction.

Circumferential movement of the chassis frame 14 about the pipe 12 is controlled by a hand-operated, gear train driven sprocket wheel 30, which is carried by a bracker 32 provided upon the end beam 18 shown towards the left side of Figure 1. The sprocket wheel 30 engages with a traction chain 34, which encircles and tightly grips the pipe 12 at a position outboard of the attachment chains 24.

A cutter assembly generally indicated by reference numeral 36 comprises a slider block 38 which carries a slider assembly 40. The slider assembly 40 in turn carries a cutter unit 42 for radial movement relative to the pipe 12 under control of a handwheel 44 and screw 46. The cutter unit 42 is preferably powered by an hydraulic motor 48. Adjustable stop means may be provided to limit the depth of cut to any desired value.

The cutter assembly 36 is supported by the chassis frame 14 for longitudinal movement relative to the pipe 12. To this end, the underside of the slider block 38 is provided with sleeves 50 which receive, and which (together with the slider block 38) are slidable along, the respective tubular members 16.

Longitudinal movement of the cutter assembly 36 is controlled by a handwheel 52 and screw 54. The screw 54 is parallel to the tubular members 16 and is supported at each end by bearing brackets 56 provided upon each end beam 18.

The screw 54 is threadedly engaged within a block 58 attached to the upper side of the slider block 38. Adjustable stops 60 are provided upon the screw 54 to limit the range of longitudinal movement, the limits being determined by abutment of the stops 60 with the block 58.

In order to prevent circumferential movement of the chassis frame 14 about the pipe 12 during longitudinal cutting, clamps or set screws 61 are provided on both of the end beams 18. The clamps or set screws 61 can be tightened down onto the pipe surface so as to clamp the chassis frame 14 in a fixed position with respect to the pipe 12.

In use, the cutting apparatus 10 is mounted upon the pipe 12 as described and the attachment chains 24 are secured to the end beams 18. The traction chain 34 is also secured to the pipe 12 in a position suitable to engage with the sprocket wheel 30. The chains 24 and 34 are then tightened. The cutter unit 42 is then activated and adjusted in height above the pipe so that the cutter tool 62, which is in the form of a milling cutter, is brought into contact with the surface of the pipe 12 by use of the handwheel 44 to start cutting a window at a desired location on the pipe. Once the cutter tool 62 has reached a depth sufficient to cut through the outer metallic layer 12a of the pipe 12, the depth of cut of the cutter tool is set and without or without significantly cutting into the plastics lining the cutter unit 42 is moved longitudinally and circumferentially by means of the handwheels 52 and 30 respectively until a complete window has been cut. The cutting apparatus 10 can then be dismounted from the pipe 12 so that the window can be removed to expose the plastics lining 12b. The plastics lining 12b can be pierced at a later stage to provide an opening, and a plastics pipe joined to the plastics lining 12b at the exposed region to form a branch pipe which communicates with the interior of the pipe 12 via the opening (not shown).

When circumferential cuts are made by the cutter tool 62, the cutter assembly 36 may be locked or secured in its position longitudinally of the pipe by, for example, screwing the stops 60 into abutment with respective opposite sides of the block 58.

As will be clear to those skilled in the art, the apparatus as described above uses a single cutting tool to effect cuts in transverse directions, selectively, and provides a reliable, efficient and precise means of cutting a window in a pipe. The apparatus of the invention gives particularly benefits where the depth of cut is important.

It will also be appreciated that the above described method and apparatus may be used on host pipes made of other materials and on pipes which are not lined, in order to cut holes or 'windows' therein.

## Claims

1. Apparatus for cutting a window in a pipe comprising: - a chassis (14) having a cutter assembly (36) comprising a cutter unit (42) provided with a milling cutting tool (62), the cutter assembly (36) being movably mounted on the chassis (14) so as to be movable longitudinally of the pipe and the cutter unit (42) being movable in directions transverse to the directions of movement of the cutter assembly (36) along the chassis (14) and, in use, towards and away from the pipe, and the cutting tool (62) being capable of effecting cuts in the pipe wall in transverse directions, characterised by further comprising
- attachment means (24) adapted to embrace the pipe to attach the chassis (14) to the pipe and to enable the chassis to be moved relative to the pipe in directions transverse to the directions of movement of the cutter assembly (36) along the chassis (14) and circumferentially of the pipe when the apparatus is in use, and
- traction means (30, 34) associated with the chassis to facilitate accurately controlling the positioning and movement of the chassis relative to the pipe.

2. Apparatus as claimed in claim 1, wherein the attachment means comprises one or more chains (24) provided with rollers (26) for engaging the surface of the pipe wall to facilitate movement of the chassis (14) around the pipe.

3. Apparatus as claimed in claim 1 or claim 2, wherein the chassis (14) is fitted with wheels (20) to engage the surface of the pipe wall to facilitate movement of the chassis around the pipe.

4. Apparatus as claimed in any of the preceding claims, wherein the traction means comprises a chain (34), for attachment to the pipe, and sprocket means (30) mounted on the chassis (14) for engagement with the chain.

5. A method of joining a pipe to a host pipe comprising an outer layer (12A) of material and an inner lining (12B), comprising employing a cutting tool (62) to cut through the outer layer (12A) to produce a cut line around a portion or area of the outer layer, removing said portion from the pipe to produce a window or opening which exposes an area of the underlying lining, producing an opening in the exposed area of the lining and joining the pipe to the exposed lining to form a branch pipe which communicates with the interior of the host pipe via the opening, characterised in that the method employs the apparatus as claimed in any of claims 1 to 4 with the cutting tool (62) being moved in transverse directions to cut through the outer layer (12A) in transverse directions without or without significantly cutting into the underlying inner lining (12B) to produce the cut line around the portion or area of the outer layer.

6. A method of cutting out and removing a portion of an outer layer of a host pipe comprising an outer layer (12A) of material and an inner lining (12B), said method comprising employing a cutting tool (62) to cut through the outer layer (12A) to produce a cut line around a portion or area of the outer layer, and removing said portion from the pipe to produce a window or opening which exposes an area of the underlying lining, characterised in that the method employs the apparatus as claimed in any of claims 1 to 4 with the cutting tool (62) being moved in transverse directions to cut through the outer layer (12A) in transverse directions without or without significantly cutting into the underlying inner lining (12B) to produce the cut line around the portion or area of the outer layer.

## Patentansprüche

1. Vorrichtung zum Schneiden eines Fensters in ein Rohr, aufweisend: ein Chassis (14) mit einer Schneidgruppe (36), die eine Schneideinheit (42) umfaßt, welche mit einem fräsenden Schneidwerkzeug (62) versehen ist, wobei die Schneidgruppe (36) beweglich auf dem Chassis (14) montiert ist, derart, daß sie in longitudinaler Richtung des Rohres bewegbar ist, während die Schneideinheit (42) in Richtungen quer zu den Bewegungsrichtungen der Schneidgruppe (36) entlang des Chassis (14) sowie, bei Benutzung, zum Rohr hin und von diesem weg bewegbar ist, und daß das Schneidwerkzeug (62) in der Lage ist, Schnitte in die Rohrwand in Querrichtungen auszuführen, dadurch gekennzeichnet, daß die Vorrichtung weiter aufweist:
- Befestigungseinrichtungen (24), die angepaßt sind, um das Rohr zu umklammern und das Chassis (14) am Rohr zu befestigen, und um das Chassis zu befähigen, relativ zum Rohr in Richtungen bewegt zu werden, die quer zu den Bewegungsrichtungen der Schneidgruppe (36) entlang des Chassis (14) sowie in Umfangsrichtung des Rohres bewegt werden, wenn die Vorrichtung in Benutzung ist, und
- Zugeinrichtungen (30, 34), die dem Chassis zugeordnet sind, um das genaue Steuern der Positionierung und der Bewegung des Chassis relativ zum Rohr zu erleichtern.

2. Vorrichtung nach Anspruch 1, bei dem die Befestigungseinrichtung eine oder mehrere Ketten (24) mit Rollkörpern (26) zum Angreifen an der Oberfläche der Rohrwand aufweist, um die Bewegung des Chassis (14) um das Rohr zu erleichtern.

3. Vorrichtung nach Anspruch 1 oder 2, bei der das Chassis (14) mit Rädern (20) zum Angreifen an der Oberfläche der Rohrwand bestückt ist, um die Bewegung des Chassis um das Rohr zu erleichtern.

4. Vorrichtung nach irgendeinem vorhergehenden Anspruch, bei dem die Zugeinrichtung eine Kette (34) zur Befestigung am Rohr, und gezahnte Einrichtungen (30) umfaßt, die auf dem Chassis (40) für den Eingriff in die Kette montiert sind.

5. Verfahren zum Verbinden eines Rohres mit einem Stammrohr, das eine äußere Materialschicht (12A) und eine innere Verkleidung (12B) aufweist, wobei das Verfahren umfaßt: das Anwenden eines Schneidwerkzeuges (62) zum Durchschneiden der äußeren Schicht (12A), um eine Schnittlinie um einen Abschnitt oder einen Bereich der äußeren Schicht herzustellen; das Entfernen des genannten Abschnittes vom Rohr, um ein Fenster oder eine Öffnung herzustellen, die einen Bereich der darunterliegenden Verkleidung freilegt; das Herstellen einer Öffnung im freigelegten Bereich der Verkleidung und das Verbinden des Rohres mit der freigelegten Verkleidung, um ein Zweigrohr zu bilden, das durch die Öffnung mit dem Inneren des Stammrohres in Verbindung steht, dadurch gekennzeichnet, daß das Verfahren die Vorrichtung verwendet, die in irgendeinem der Ansprüche 1 bis 4 beansprucht ist, wobei das Schneidwerkzeug (62) in Querrichtungen bewegt wird, um durch die äußere Schicht in querverlaufenden Richtungen zu schneiden, ohne bzw. ohne erheblich in die darunterliegende innere Verkleidung (12B) einzuschneiden, um die Schnittlinie um den Abschnitt oder den Bereich der äußeren Schicht herzustellen.

6. Verfahren zum Ausschneiden und Entfernen eines Abschnittes einer äußeren Schicht eines Stammrohres, das eine äußere Materialschicht (12A) und eine innere Verkleidung (12B) aufweist, wobei das Verfahren umfaßt: das Anwenden eines Schneidwerkzeuges (62) zum Durchschneiden der äußeren Schicht (12A), um eine Schnittlinie um einen Abschnitt oder einen Bereich der äußeren Schicht herzustellen; und das Entfernen des genannten Abschnittes vom Rohr, um ein Fenster oder eine Öffnung herzustellen, die einen Bereich der darunterliegenden Verkleidung freilegt, dadurch gekennzeichnet, daß das Verfahren die Vorrichtung verwendet, die in irgendeinem der Ansprüche 1 bis 4 beansprucht ist, wobei das Schneidwerkzeug (62) in Querrichtungen bewegt wird, um durch die äußere Schicht (12A) in querverlaufenden Richtungen zu schneiden, ohne bzw. ohne erheblich in die darunterliegende innere Verkleidung (12B) einzuschneiden, um die Schnittlinie um den Abschnitt oder den Bereich der äußeren Schicht herzustellen.

## Revendications

1. Appareil pour découper une fenêtre dans une conduite, comportant : - un châssis (14) ayant un ensemble de coupe (36) comportant une unité de coupe (42) pourvue d'un outil de fraisage (62), l'ensemble de coupe (36) étant monté de façon mobile sur le châssis (14) de manière à être déplaçable le long de la conduite et l'unité de coupe (42) étant déplaçable suivant des directions transversales aux directions de déplacement de l'ensemble de coupe (36) le long du châssis (14) et, en service, vers et à l'écart de la conduite, et l'outil de coupe (62) étant capable d'effectuer des découpes dans la paroi de la conduite suivant des directions transversales, l'appareil étant caractérisé en ce qu'il comporte en outre
- des moyens d'attelage (24) adaptés à étreindre la conduite pour atteler le châssis (14) à la conduite et pour permettre au châssis d'être déplacé par rapport à la conduite suivant des directions transversales aux directions de déplacement de l'ensemble de coupe (36) le long du châssis (14) et autour de la conduite lorsque l'appareil est en service, et
- des moyens de traction (30, 34) associés au châssis pour faciliter la commande de façon précise du positionnement et du mouvement du châssis par rapport à la conduite.

2. Appareil selon la revendication 1, dans lequel les moyens d'attelage comportent une ou plusieurs chaînes (24) pourvues de rouleaux (26) pour s'appliquer sur la surface de la paroi de la conduite, afin de faciliter le déplacement du châssis (14) autour de la conduite.

3. Appareil selon la revendication 1 ou la revendication 2, dans lequel le châssis (14) est muni de roues (20) pour s'appliquer sur la surface de la paroi de la conduite, afin de faciliter le déplacement du châssis autour de la conduite.

4. Appareil selon l'une quelconque des revendications précédentes, dans lequel les moyens de traction comportent une chaîne (34), pour l'attelage à la conduite, et des moyens à dents de pignon à chaînes (30) montés sur le châssis (14) pour venir en prise avec la chaîne.

5. Procédé pour relier une conduite à une conduite hôte comportant une couche de matière (12A) externe et une garniture interne (12B), comportant la mise en oeuvre d'un outil de coupe (62) pour couper à travers la couche externe (12A) afin de produire une ligne de coupe autour d'une partie ou zone de la couche externe, le retrait de ladite portion de la conduite afin de produire une fenêtre ou ouverture qui expose une zone de la garniture sous-jacente, la production d'une ouverture dans la zone exposée de la garniture et la jonction de la conduite à la garniture exposée afin de former une conduite d'embranchement qui communique avec l'intérieur de la conduite hôte via l'ouverture, caractérisé en ce que le procédé met en oeuvre l'appareil suivant l'une quelconque des revendications 1 à 4 avec l'outil de coupe (62) qui est déplacé suivant des directions transversales afin de couper à travers la couche externe (12A) suivant les directions transversales, sans couper, ou en coupant de manière non significative, dans la garniture interne sous-jacente (12B), afin de produire la ligne de coupe autour de la partie ou zone de la couche externe.

6. Procédé pour découper et retirer une partie d'une couche externe d'une conduite hôte comportant une couche de matière externe (12A) et une garniture interne (12B), ledit procédé comportant la mise en oeuvre d'un outil de coupe (62) pour couper à travers la couche externe (12A) afin de produire une ligne de coupe autour d'une partie ou zone de la couche externe, et le retrait de ladite partie de la conduite afin de produire une fenêtre ou ouverture qui expose une zone de la garniture sous-jacente, caractérisé en ce que le procédé met en oeuvre l'appareil selon l'une quelconque des revendications 1 à 4, l'outil de coupe (62) étant déplacé suivant des directions transversales pour couper à travers la couche externe (12A) suivant des directions transversales, sans couper, ou en coupant de manière non significative, dans la garniture interne sous-jacente (12B), afin de produire la ligne de coupe autour de la partie ou zone de la couche externe.
